## Europäisches Patentamt

## European Patent Office

## Office européen des brevets

(11) Publication number: **0 110 600**
**B1**

(12) **EUROPEAN PATENT SPECIFICATION**

(45) Date of publication of patent specification: **04.02.87**

(21) Application number: **83306853.9**

(22) Date of filing: **10.11.83**

(51) Int. Cl.⁴: **B 60 R 1/08**

(54) **Rear view mirror assembly.**

(30) Priority: **23.11.82 GB 8233360**

(43) Date of publication of application:
**13.06.84 Bulletin 84/24**

(45) Publication of the grant of the patent:
**04.02.87 Bulletin 87/06**

(84) Designated Contracting States:
**DE GB**

(56) References cited:
**DE-C-1 237 454**
**GB-A-1 173 402**
**GB-A-1 187 170**
**GB-A-1 199 877**
**GB-A-1 363 070**

(73) Proprietor: **BRITAX (WINGARD) LIMITED**
**Chandler Road**
**Chichester West Sussex PO19 2UG (GB)**

(72) Inventor: **Cunningham, Douglas James**
**"Sambourne" 4 Church Close Dunton Bassett**
**Lutterworth Leicestershire LE16 5JY (GB)**
Inventor: **Turner, Paul William**
**36 West Avenue Castle Bromwich**
**Birmingham West Midlands B36 ODY (GB)**

(74) Representative: **Hollinghurst, Antony**
**Britax Limited Patent Department Kingsham**
**Road**
**Chichester West Sussex PO19 2UG (GB)**

Courier Press, Leamington Spa, England.

## Description

This invention relates to a rear view mirror assembly for a vehicle of the type in which a mirror carrier, carrying a mirror glass, is capable of being tilted into each of the two alternative stable positions by means of a lever. The two positions form a normal and an anti-dazzle position.

The invention is particularly concerned with a rear view mirror assembly of this type, in which a mounting element is adapted to be secured at a first end to the body of the vehicle and a mirror carrier, supporting a reflective member, is capable of being tilted with respect to the mounting element into each of two stable positions by means of a lever which is connected to a second end of the mounting element by a hinge. Such a mirror assembly is disclosed in Patent Specification GB—A—1187170, in which the mirror carrier takes the form of a frame or housing which is biased resiliently towards its stable positions substantially solely by the resilience of the material of the frame or housing itself. Consequently, the entire frame or housing has to be formed of a material of sufficient resilience for the required bias to be achieved.

According to the present invention, a rear view mirror assembly for a vehicle comprises a mounting element adapted to be secured at a first end to the body of a vehicle, a mirror carrier supporting a reflective member and capable of being tilted with respect to the mounting element into each of two alternative stable positions by means of a lever which is connected to a second end of the mounting element by a hinge, wherein the mounting element, the lever and a flexible coupling element are moulded integrally with one another of resilient plastics material to form a mounting member, the coupling element having one end connected to the mounting element at an end location adjacent to the first end thereof and having its other end rigidly connected to the lever adjacent to the hinge, the length of the coupling element differing from the distance between the hinge and said end location so that the coupling element has two stable states with its mid point respectively in front of and behind the plane containing the hinge and said end location.

The coupling element may be formed with sufficient inherent resilience and flexibility to be readily moveable between its two stable states. Alternatively or additionally, a hinge may be provided either at said end location or at an intermediate point along its length. If desired, both such additional hinges may be provided.

Preferably the hinges are integrally moulded with the members which they interconnect.

In one form of the invention, the mirror carrier takes the form of a case pivotally mounted on the mounting member for angular movement about the second hinge axis. The case encloses the mounting member and the lever has a formation which is a sliding fit in an opening in the case so as to permit relative movement in a radial direction towards and away from the second hinge axis.

Two embodiments of the invention will now be described, by way of example, with reference to the accompanying drawings, in which:

Figure 1 is a transverse sectional view of a mirror assembly in accordance with the invention, taken on a plane immediately behind the reflective member;

Figure 2 is a cross-sectional view taken on the line 2—2 in Figure 1;

Figure 3 is a cross-sectional view taken on the line 3—3 in Figure 1, with the mirror case omitted; and

Figure 4 is a cross-sectional view, similar to Figure 2, of another embodiment of the invention.

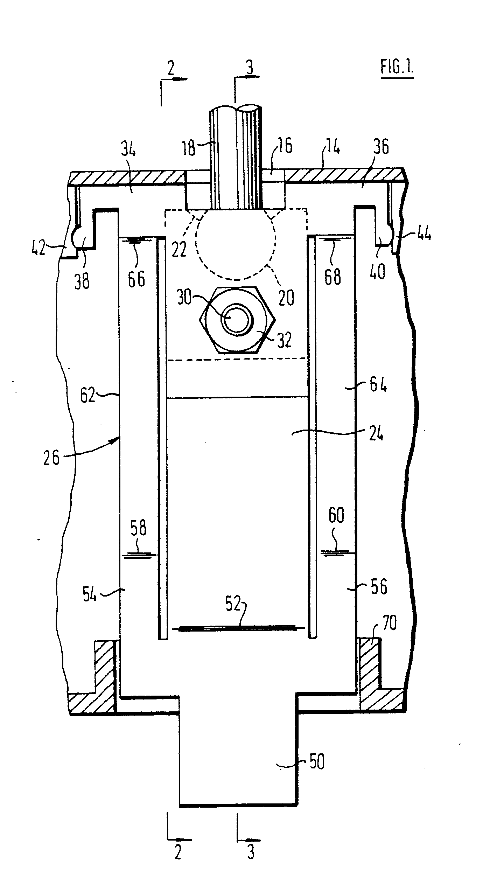

Referring to Figures 1 to 3, a rear view mirror has a reflective member 10 in the form of a prism with a layer of silvering 12 on its second surface. The prism 10 is mounted in a plastic case 14.

The case 14 has a hole 16 in its top surface. A mounting stem 18 has a spherical formation 20 on its free end within the housing 14. The other end of the stem 18 (not shown) is adapted to be secured to a vehicle body in any convenient known manner.

Within the case 14, the spherical formation 20 engages in a socket 22 formed in the main body portion 24 of a mounting member 26. The socket 22 has a flared mouth leading to a spherical concave portion with a slot 28 extending from its inner side so as to permit the mouth of the socket 22 to snap over the spherical formation 20 during assembly. A bolt 30 projects through the body portion 24 across the slot 28 into engagement with a nut 32 so as to permit adjustment of the frictional engagement between the spherical formation 20 and the socket 22 so as to provide the required degree of resistance to movement of the mounting member 26 relative to the stem 18 to permit adjustment of the orientation of the mirror and retention of the required orientation.

On each side of the socket 22, the mounting member 26 has shoulders 34 and 36 with part-cylindrical upper surfaces. The interior of the top of the housing 14 has complementary formations whereby the case 14 is supported on the shoulders 34 and 36 in such a manner that its orientation can be adjusted about the common axis of the cylindrical upper surfaces of the shoulders 34 and 36. On their outer ends, the shoulders 34 and 36 carry respective resilient lugs 38 and 40 which have projections to engage in complementary recesses in ribs 42 and 44 which are formed integrally with the case 14. These projections and recesses are located on the axis of the above-mentioned cylindrical surfaces and inhibit upward displacement of the case 14 relative to the mounting member 26 while permitting snap-fit assembly.

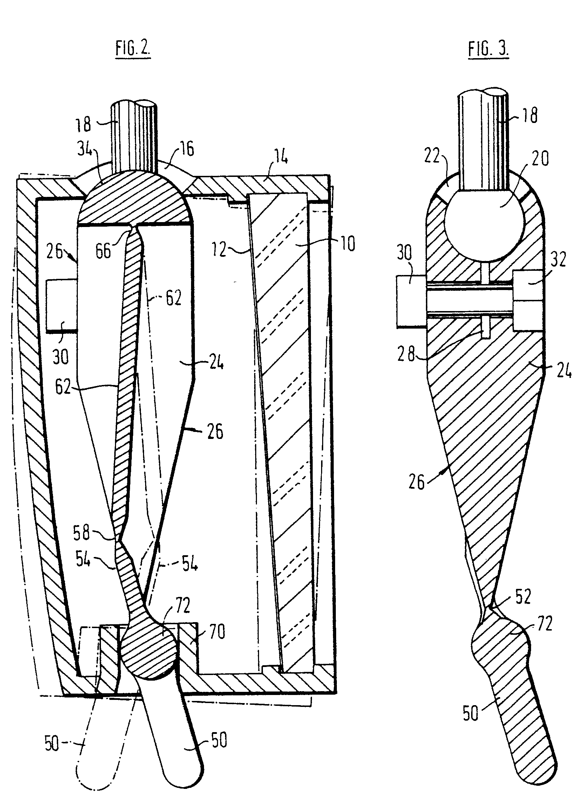

At the opposite end to the recess 22, the body portion 24 of the mounting member 26 is connected to a lever 50 by an integrally moulded hinge formation 52. The lever 50 has a pair of side limbs 54 and 56 which extend beyond the hinge formation 52, one on each side of the body portion 24 and which are joined, by respective integrally moulded hinge formations 58 and 60 to respective strips 62 and 64. The strips 62 and 64 are connected at their other ends to the corresponding shoulders 34 and 36 by respective integral hinge formations 66 and 68 and, together with the limbs 54 and 56, form flexible coupling elements in accordance with the invention. The combined length of each of the connecting strips 62 and 64 and the part of the corresponding limbs 54 and 56 which projects beyond the hinge formation 52 is greater than the length of the body portion between the hinge formations 66 and 68 and the hinge formation 52. The result of this is that, as can best be seen from Figure 2, the mounting member 26 has two stable positions. In one of these stable positions, illustrated in solid lines, the hinge formation 58 lies further from the prism 10 than the plane of symmetry of the body portion 24 and the free end of the lever projects forwardly. In the other stable position, illustrated in chain-dotted lines in Figure 2, the hinge formation 58 is in front of the plane of symmetry of the body portion 24 and the free end of the lever 50 projects away from the prism 10.

In order to transmit the foregoing movement of the lever 50 to the case 14, the bottom of the latter is provided with a rectangular boss 70 through which the lever 50 projects. The lever 50 carries a cylindrical formation 72 which is a sliding fit in the boss 70. The result is that, although the formation 72 is free to move relative to the case in directions towards and away from the stem 18, any movement perpendicular to this direction is transmitted to the case 14. The angular movement of the case 14 as the mirror moves between its two stable positions is arranged to be equal to the angle between the front and rear surfaces of the prism 10 so that those images which are reflected from the layer of silvering when the lever is in the position shown in solid lines in Figure 2, are reflected from the front surface of the prism 10 when the lever 50 is in the position shown in chain-dotted lines.

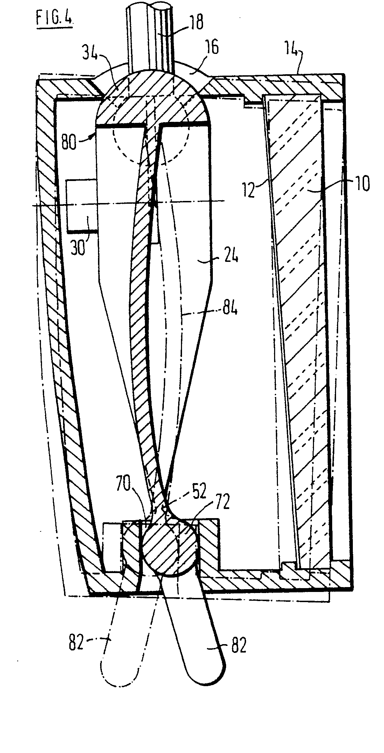

Figure 4 illustrates a modified embodiment of the invention. Components which are identical with the corresponding components of Figures 1 to 3 are denoted with the same reference numerals and will not be described in detail. Briefly, the mounting member 80 is similar to the mounting member 26 of Figures 1 to 3 in that it has a lever 82 connected to its lower end by an integrally moulded hinge formation 52. However unlike the side limbs 62 and 64 of Figures 1 to 3, the side limbs 84 of the lever 82 extend up to the shoulders 34 to 35. (The shoulder 36 and the second side limb 84 attached thereto are not visible in Figure 4.) The side limbs 84 are sufficiently resilient to permit the hinge formations 58, 60 and 66, 68 to be dispensed with.

## Claims

1. A rear view mirror assembly for a vehicle comprising a mounting element (24) adapted to be secured at a first end (22) to the body of a vehicle, a mirror carrier (14) supporting a reflective member (10) and capable of being tilted with respect to the mounting element (24) into each of two alternative stable positions by means of a lever (50, 82) which is connected to a second end of the mounting element (24) by a hinge (52), characterised in that the mounting element (24), the lever (50, 82) and a flexible coupling element (54, 56, 62, 64, 84) are moulded integrally with one another of resilient plastics material to form a mounting member (26), the coupling element (54, 56, 62, 64, 84) having one end connected to the mounting element (24) at an end location adjacent to the first end (22) thereof and having its other end rigidly connected to the lever (50, 82) adjacent to the hinge (52), the length of the coupling element (54, 56, 62, 64, 84) differing from the distance between the hinge (52) and said end location so that the coupling element (54, 56, 62, 64, 84) has two stable states with its mid point respectively in front of and behind the plane containing the hinge (52) and said end location.

2. A mirror assembly according to claim 1, characterised in that a further hinge (66) connects the coupling element (62, 64) to the mounting element (24).

3. A mirror according to claim 1 or 2, characterised in that the coupling element (62, 64) has a further hinge (58) at an intermediate point along its length.

4. A mirror assembly according to claim 1, characterised in that the resilience and flexibility of the coupling element (84) permit it to move between its two stable states.

5. A mirror assembly according to any preceding claim, characterised in that the mirror carrier (14) comprises a case pivotally mounted on the mounting member (24), the lever (50, 82) having a formation (72) which is a sliding fit in an opening (70) in the case so as to permit relative movement in a radial direction towards and away from the pivotal mounting.

## Patentansprüche

1. Rückspiegelaufbau für ein Kraftfahrzeug, der ein Befestigungselement (24), das an einem ersten Ende (22) zur Befestigung an der Karosserie eines Kraftfahrzeugs ausgebildet ist und einen Spiegelhalter (14) aufweist, der ein reflektierendes Teil (10) hält und in Bezug auf das Befestigungselement (24) mit einem Hebel (50, 82), der mit einem zweiten Ende des Befestigungselements über ein Gelenk (52) in Verbindung steht, in zwei alternative, stabile Positionen schräggestellt werden kann, dadurch gekennzeichnet, daß das Befestigungselement (24), der Hebel (50, 82) und ein flexibles Verbindungsteil (54, 56, 62, 64, 84) aus elastischem Kunststoffmaterial miteinander verbunden in Form hergestellt sind und zusammen eine Befestigungseinheit (26) bilden, wobei das Verbindungsteil (54, 56, 62, 64, 84) mit einem Ende in einer Endposition angrenzend an seinem ersten Ende (22) mit dem Befestigungselement (24) verbunden ist und mit seinem anderen Ende fest mit dem Hebel (50, 82) angrenzend an das Gelenk (52) verbunden ist, und wobei die Länge des Verbindungsteils (54, 56, 62, 64, 84) sich von dem Abstand zwischen dem Gelenk (52) und der bezeichneten Endposition so unterscheidet, daß das Verbindungsteil (54, 56, 62, 64, 84) zwei stabile Positionen einnimmt, in denen seine Mittenposition entweder vor oder hinter der Fläche, in der sich das Gelenk (52) und die genannte Endposition befindet, liegt.

2. Rückspiegelaufbau nach Anspruch 1, dadurch gekennzeichnet, daß über ein weiteres Gelenk (66) das Verbindungsteil (62, 64) mit dem Befestigungselement (24) in Verbindung steht.

3. Rückspiegelaufbau nach Anspruch 1 oder 2, dadurch gekennzeichnet, daß das Verbindungsteil (62, 64) ein weiteres Gelenk (58) an einer Zwischenposition entlang seiner Länge aufweist.

4. Rückspiegelaufbau nach Anspruch 1, 2 oder 3, dadurch gekennzeichnet, daß die Elastizität und Flexibilität des Verbindungsteils (84) dessen Bewegung zwischen seinen zwei stabilen Positionen gestattet.

5. Rückspiegelaufbau nach einem der vorhergehenden Ansprüche, dadurch gekennzeichnet, daß der Spiegelhalter (14) ein Gehäuse umfaßt, das gelenkig drehbar an dem Befestigungselement (24) befestigt ist, und daß der Hebel (50, 82) eine Ausformung aufweist, die sich im Gleitsitz in einer Öffnung (70) im Gehäuse befindet, um so eine Relativbewegung in radialer Richtung auf die gelenkig drehbare Befestigung zu und von ihr weg zu ermöglichen.

## Revendications

1. Un ensemble de miroir rétroviseur pour un véhicule comprenant un élément de montage (24) adapté pour être fixé à une première extrémité (22) au châssis d'un véhicule, un support de miroir (14) supportant un élément réfléchissant (10) et susceptible d'être basculé par rapport à l'élément de montage (24) dans chacune des deux positions alternées stables par l'intermédiaire d'un levier (50, 82) qui est relié à une seconde extrémité de l'élément de montage (24) par une articulation (52), caractérisé en ce que l'élément de montage (24), le levier (50, 82) et un élément d'accouplement flexible (54, 56, 62, 64, 84) sont moulés d'une seule pièce avec un autre élément en matière plastique élastique pour former un élément de montage (26), l'élément d'accouplement (54, 56, 62, 64, 84) ayant une extrémité reliée à l'élément de montage (24) en une position extrême adjacente à la première extrémité (22) de celui-ci et ayant son autre extrémité reliée rigidement au levier (50, 82) adjacente à l'articulation (52), la longueur de l'élément d'accouplement (54, 56, 62, 64, 84) étant différente de la distance séparant l'articulation (52) de ladite position d'extrémité de telle sorte que l'élément d'accouplement (54, 56, 62, 64, 84) présente deux états stables avec son point médian respectivement en face de et derrière le plan contenant l'articulation (52) et ladite position d'extrémité.

2. Un ensemble de miroir selon la revendication 1, caractérisé en ce qu'une autre articulation (66) relie l'élément d'accouplement (62, 64) à l'élément de montage (24).

3. Un miroir selon la revendication 1 ou 2, caractérisé en ce que l'élément d'accouplement (62, 64) présente une autre articulation (58) en un point intermédiaire de sa longueur.

4. Un ensemble de miroir selon la revendication 1, caractérisé en ce que l'élasticité et la flexibilité de l'élément d'accouplement (84) lui permet de se déplacer entre ces deux étants stables.

5. Un ensemble de miroir selon l'une quelconque des revendications précédentes, caractérisé en ce que le support de miroir (14) comprend un boîtier monté pivotant sur l'élément de montage (24) le levier (50, 82) ayant une structure (72) qui est montée coulissante dans une ouverture (70) de manière à permettre le déplacement relatif dans une direction radiale dirigée vers et s'éloignant de l'élément de montage pivotant.

FIG.1.

FIG. 2.

FIG. 3.

FIG. 4.